# FASCICULE DE BREVET EUROPEEN

(11) **EP 3 515 584 B1**
(45) Date de publication et mention de la délivrance du brevet: **02.11.2022**
(21) Numéro de dépôt: 17767850.5
(22) Date de dépôt: 18.09.2017
(51) Int. Cl.: B01J 8/02, B01J 8/00

(54) **PAROI CYLINDRIQUE DE FILTRAGE DE PARTICULES SOLIDES DANS UN FLUIDE**
ZYLINDRISCHE WAND ZUM FILTERN VON FESTSTOFFPARTIKELN IN EINEM FLUID
CYLINDRICAL WALL FOR FILTERING SOLID PARTICLES IN A FLUID

(30) Priorité: 20.09.2016 FR 1658813
(43) Date de publication de la demande: 31.07.2019
(73) Titulaire: TotalEnergies OneTech, 92400 Courbevoie (FR)
(72) Inventeur: NASCIMENTO, Pedro, 76620 Le Havre (FR); SELMEN, Arnaud, 76620 Le Havre (FR); BELIN, Renaud, 76600 Le Havre (FR)
(74) Mandataire: Kerneur, Youen
(86) Numéro de dépôt international: PCT/EP2017/073474
(87) Numéro de publication internationale: WO 2018/054838

(56) Documents cités:
- EP-A1- 3 037 165
- EP-A1- 3 064 268
- EP-A2- 0 402 783
- EP-B1- 3 064 268

## Description

L'invention concerne une paroi cylindrique de filtrage de particules solides dans un fluide, par exemple une paroi de lit catalytique à flux radial. L'invention peut trouver une application par exemple dans les reformeurs catalytiques, dans les régénérateurs de reformage, dans le cadre d'autres procédés de transformation par déshydrogénation, et plus généralement dans le cadre de tout procédé de filtrage de particules solides dans un fluide au moyen d'une paroi cylindrique.

Les documents US 3,167,399, US 2,997,374 et l'article de F. Pradel et al., (2001) « A New Concept of Scallops Screens for Reactors of Refining », paru dans la revue Oil and Gas Science and Technology, décrivent des exemples de réacteurs à flux radial.

Ce type de réacteurs peut par exemple être utilisé dans des unités de reformage catalytique, dans d'autres unités de transformation par déshydrogénation, ou bien encore dans des unités de régénérateurs de reformage catalytique.

Le reformage catalytique permet de convertir des molécules naphténiques en molécules aromatiques ayant un indice d'octane plus élevé à des fins d'obtention de carburant automobile.

Le reformage peut être régénératif ou semi régénératif. Dans le cas d'un reformage régénératif, du catalyseur peut circuler entre des parois cylindriques concentriques d'un lit catalytique à flux radial. Dans le cas d'un reformage semi-régénératif, le catalyseur est simplement contenu dans l'espace annulaire défini par les parois concentriques.

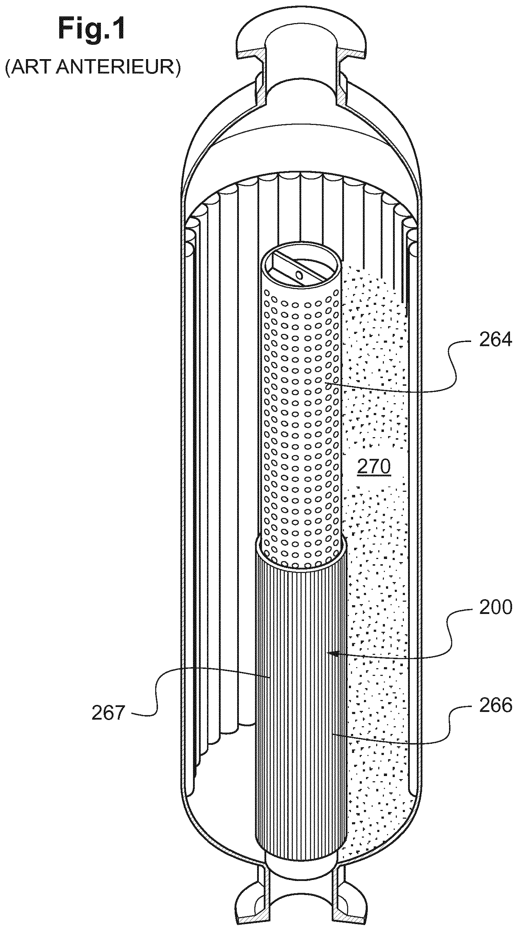

La figure 1 montre un exemple de réformeur catalytique selon l'art antérieur. Une paroi cylindrique 200 de lit catalytique à flux radial comprend classiquement une plaque perforée 264 formant un élément cylindrique et une grille 266 formant un autre élément cylindrique, ces éléments cylindriques étant concentriques. La grille 266 est destinée à être en contact avec le fluide dans lequel baigne le catalyseur 270 (le fluide et le catalyseur étant représentés sur une partie seulement du reformeur sur la figure 1) et comprend des plats (non visibles sur la figure 1) s'étendant chacun suivant une direction tangentielle et disposés à des hauteurs diverses ainsi que des fils 267 s'étendant verticalement et solidarisés aux plats.

Une paroi de cylindre intérieur (« center pipe » en anglais) comprend la plaque perforée qui assure une tenue mécanique. La grille participe à la rétention du catalyseur dans l'espace annulaire.

Afin que la grille forme un élément cylindrique, on solidarise l'ensemble des extrémités de plats à la plaque perforée au moyen d'une ligne de soudure verticale (non représenté sur la figure 1). Cette ligne de soudure empêche le passage de catalyseur vers la plaque perforée.

Néanmoins la soudure peut subir des contraintes mécaniques relativement élevées, notamment par dilatation thermique lors des cas d'arrêt non prévus de l'unité ou lors des phases de redémarrage suivant ces arrêts imprévus. En cas de rupture au niveau de la soudure, un passage peut être créé pour le catalyseur vers la plaque perforée. Cela entraîne une perte de confinement du catalyseur en dehors du réacteur.

Il est alors recommandé de réparer cette liaison avec un nouveau cordon de soudure. Ceci impose néanmoins un arrêt du réacteur et donc de l'ensemble de l'unité.

On cherche à éviter ou tout au moins limiter les arrêts de réacteurs. En effet, l'arrêt d'une unité d'une raffinerie peut générer des manques à gagner relativement importants.

Les documents WO 01/66239 et US 2008/0107575 décrivent des parois de panier extérieur (« outer basket » en anglais), réalisées à partir de plusieurs conduits longitudinaux creux, correspondant chacun à une plage angulaire.

On connait aussi des systèmes sans grille, impliquant une structure à persiennes, comme par exemple dans le document WO 2012/044594. EP 3 064 268 décrit une paroi de filtrage comprenant une grille cylindrique et un tube concentriques. Le tube définit des trous et la grille cylindrique est constituée des fils verticaux solidarisés par soudure à des anneaux de support horizontaux. D1 décrit ainsi que le tube peut être solidarisé à la grille cylindrique par boulonnage.

Il existe un besoin pour une paroi cylindrique de filtrage de particules solides permettant de concilier simplicité et fiabilité.

Il est proposé une paroi cylindrique de filtrage de particules solides dans un fluide, au travers laquelle ce fluide est susceptible de circuler, cette paroi comprenant :
- un cylindre perforé s'étendant suivant une direction longitudinale, ce cylindre étant réalisé à partir d'au moins une plaque perforée,
- un ensemble de grille, à forme générale de cylindre, destiné à être en contact avec les particules solides, l'ensemble de grille et le cylindre perforé étant concentriques, l'ensemble de grille comportant au moins un élément de grille, cet élément comprenant une pluralité de fils s'étendant chacun suivant une direction longitudinale et disposés adjacents les uns par rapport aux autres afin de laisser le fluide circuler entre les fils tout en filtrant les particules solides,
- des moyens d'assemblage dudit au moins un élément de grille afin de former l'ensemble de grille, ces moyens d'assemblage étant agencés pour assurer une fixation dudit au moins un élément de grille démontable sur la plaque perforée.

Ainsi, on conserve une structure de cylindres concentriques, de conception et de fabrication plus simples que les structures à conduits longitudinaux et les structures à persiennes, et ce tout en limitant les contraintes mécaniques, ce qui, dans le cas d'une application aux réacteurs, permet de limiter les arrêts de réacteurs par rapport aux parois de l'art antérieur dans lesquelles la soudure longitudinale est soumise aux efforts liés aux dilatations du cylindre de grille et à la dilatation du cylindre perforé. Les cylindres étant susceptibles d'être réalisés en des matériaux différents, ces dilatations peuvent, dans l'art antérieur, engendrer des efforts d'arrachement ou de cisaillement.

Ainsi la paroi décrite ci-dessus peut-elle s'avérer plus robuste que les parois à soudure du type connu de l'art antérieur, et en outre la maintenance est facilitée.

Par « une pluralité de fils », on entend un nombre de fils de préférence supérieur à cinq, avantageusement supérieur à dix ou vingt.

Dans un mode de réalisation, l'ensemble de grille peut comprendre en outre une pluralité de plats espacés les uns des autres suivant la direction longitudinale et s'étendant chacun tangentiellement et solidarisés aux fils.

Les fils peuvent par exemple être soudés sur les plats, même si l'invention n'est pas limitée à cette forme de réalisation.

L'invention n'est en rien limitée à la présence d'une pluralité de plats. Ainsi, dans un autre mode de réalisation, les fils peuvent être solidarisés entre eux, chaque fil étant solidarisé à ses voisins de part et d'autre, par des liaisons ponctuelles. Un tel élément de grille dénué de plats peut être obtenu par impression 3D par exemple.

Avantageusement, la paroi peut comprendre en outre des moyens d'étanchéité agencés pour obturer sur un bord d'extrémité d'au moins un élément de grille un passage d'écoulement entre cet élément de grille et la plaque perforée.

Les moyens d'étanchéité peuvent permettre d'éviter des pertes de confinement susceptibles de se produire en l'absence d'une soudure longitudinale solidarisant l'ensemble de grille au cylindre perforé, du type connu de l'art antérieur.

Les moyens d'étanchéité peuvent permettre d'empêcher le passage de particules solides dans l'espace entre l'ensemble de grille et le cylindre perforé au niveau des bords d'extrémité des éléments de grille. En particulier, les moyens d'étanchéité permettent d'empêcher le passage de particules solides entre les fils et le cylindre perforé.

Les moyens d'étanchéité peuvent par exemple comprendre :
- une ou des plaques d'étanchéité s'étendant suivant la direction longitudinale sur au moins une partie de, et avantageusement toute, la longueur du cylindre de grille, ces plaques étant disposées sur les bords d'extrémité des éléments de grille afin d'empêcher le passage de particules solides entre les fils et la plaque perforée ; le cas échéant, ces plaques peuvent s'étendre radialement sur une épaisseur proche de, ou égale à, celle des plats ou des fils les plus épais, et/ou
- une ou des plaques de recouvrement s'étendant de façon à recouvrir deux bords d'extrémité de deux éléments de grille adjacents, ou, dans le cas où l'ensemble de grille comporte un seul élément de grille, entre les deux bords d'extrémité de cet élément de grille. Cette plaque de recouvrement permet ainsi une obturation du passage vers la plaque perforée plus en aval que les plaques d'étanchéité.

Les moyens d'assemblage peuvent avantageusement être agencés pour assurer un assemblage rigide.

Dans un mode de réalisation, on peut prévoir un seul élément de grille pour l'ensemble de grille, mais avantageusement, l'ensemble de grille peut comprendre plusieurs éléments de grille.

Chaque élément de grille s'étend longitudinalement et tangentiellement.

Les moyens d'assemblage peuvent permettre d'assembler :
- des éléments de grille s'étendant chacun tangentiellement de façon à occuper une plage angulaire strictement inférieure à 360°, avantageusement inférieure ou égale à 180°, par exemple une plage angulaire légèrement inférieure à 180° lorsqu'un y a deux éléments de grille à une hauteur donnée ; les moyens d'assemblage peuvent alors comprendre par exemple une portion s'étendant suivant la direction longitudinale, ou bien encore plusieurs éléments d'assemblage ponctuels espacés les uns des autres suivant la direction longitudinale,
- des éléments de grille s'étendant chacun longitudinalement de façon à occuper une portion seulement de la hauteur du cylindre de grille ; les moyens d'assemblage peuvent alors comprendre par exemple une portion ayant une forme générale d'arc de cercle ou de cercle, ou bien encore plusieurs éléments d'assemblage ponctuels disposés en arc de cercle.

Lorsque plusieurs éléments de grille sont ainsi prévus, on peut fabriquer l'ensemble de grille par secteurs, et le cas échéant de remplacer les éléments de grille indépendamment les uns des autres. Par exemple, si un élément de grille s'avère défaillant, on peut le retirer et le remplacer par un élément de grille fonctionnel, et ce tout en laissant les autres éléments de grille inchangés.

Avantageusement, on choisira des éléments de grille dimensionnés pour pouvoir passer par un trou d'homme défini dans le réacteur, afin de faciliter ces opérations.

Même si on peut prévoir des éléments ponctuels, les moyens d'assemblage peuvent avantageusement comprendre des éléments d'assemblage s'étendant longitudinalement, hélicoïdalement ou tangentiellement, de façon à assurer la fixation et l'étanchéité d'une partie au moins d'un bord d'extrémité d'un ou deux éléments de grille.

Avantageusement, au moins un élément d'assemblage peut définir au moins une cavité, par exemple une ou deux cavité(s), pour recevoir au moins un bord d'extrémité d'élément de grille correspondant.

Lorsque plusieurs éléments de grille de dimensions relativement modestes sont prévus, les moyens d'assemblage peuvent ainsi former une ossature support pour recevoir ces différents éléments de grille.

Les moyens d'assemblage du ou des éléments de grille permettent d'assurer une fixation démontable du ou des éléments de grille sur le cylindre perforé.

Les efforts induits par les différences de dilation entre le cylindre perforé et le ou les élément(s) de grille peuvent être moindres que si ce(s) élément(s) de grille étai(en)t solidarisé au cylindre perforé par une soudure, comme dans l'art antérieur.

Avantageusement et de façon non limitative, les moyens d'assemblage peuvent être agencés pour pouvoir être installés de façon démontable sur le cylindre perforé, par exemple au moyen d'une tige, filetée ou non, ou autre.

Avantageusement, les moyens d'assemblage peuvent comprendre une tige, filetée ou non, destinée à être introduite dans ou au travers d'une plaque perforée du cylindre perforé.

Les moyens d'assemblage peuvent par exemple comprendre une vis d'assemblage, une vis de pression ou un goujon, un boulon, un système de goupille écrou, une bride ou autre.

Avantageusement, la paroi est agencée de sorte que la ou les tiges passent au travers d'une ou des, respectivement, perforation(s) de la plaque perforée. On profite ainsi des perforations existantes pour assembler le ou les éléments de grille sur le cylindre perforé.

En outre, on pourra relever que la paroi peut ainsi comprendre un cylindre perforé installé de longue date, la fixation des éléments de grille étant compatible avec l'existant.

Par exemple, on peut prévoir de fixer chaque extrémité de plat sur la plaque perforée correspondante au moyen de vis d'assemblage, et d'assurer l'étanchéité par des plaques d'étanchéité obturant un passage entre les fils et la plaque perforée en regard. On pourra prévoir en outre une ou des plaque(s) de recouvrement, notamment si les bords d'extrémité des éléments de grille sont relativement distants.

L'invention n'est en rien limitée à cette caractéristique relative au caractère démontable de la fixation moyens d'assemblage - plaque perforée : on pourrait par exemple prévoir des moyens d'assemblage, par exemple de type lame ressort, soudés sur le cylindre perforé et venant appuyer sur le bord d'extrémité d'un élément de grille.

L'invention prévoit des moyens d'assemblage installés de façon démontable sur le ou les éléments de grille.

Dans un mode de réalisation, on peut par exemple prévoir que les moyens d'assemblage comprennent des tiges filetées traversant des orifices définis dans des plats respectifs et des orifices de la plaque perforée afin de fixer ces plats au cylindre perforé.

Toutefois, la paroi peut avantageusement être agencée de sorte que les moyens d'assemblage définissent, éventuellement avec le cylindre perforé ou une autre plaque, au moins une cavité pour recevoir au moins une portion d'au moins un bord d'extrémité d'élément de grille. L'élément de grille peut ainsi être conservé intact.

Les moyens d'assemblage peuvent ainsi comprendre une portion de rétention, destinée à recouvrir une portion correspondante de bord d'extrémité d'élément de grille, afin que ce bord d'extrémité soit retenu sous cette portion de rétention, par exemple intercalé entre cette portion de rétention et le cylindre de grille.

Les moyens d'assemblage peuvent être agencés de sorte que la portion de rétention exerce un appui sur le bord d'extrémité correspondant, afin de plaquer ledit bord d'extrémité contre le cylindre perforé.

Les moyens d'assemblage peuvent par exemple comprendre un ressort, par exemple un ressort à lame, exerçant un appui sur une extrémité de plat correspondante et/ou sur les fils.

L'appui peut alternativement être obtenu au moyen d'une vis. La portion de rétention peut par exemple faire partie d'un élément de bride.

Ainsi, les moyens d'assemblage peuvent comprendre un élément de bride définissant un orifice pour le passage de la tige et une portion de rétention destinée à exercer un appui sur un élément de grille, de sorte que la tige puisse être installée à distance des fils. Cet élément de bride peut ainsi permettre une fixation sans endommager les fils.

Même si les moyens d'assemblage peuvent comprendre plusieurs éléments ponctuels, correspondant chacun à une ou deux extrémités de plats par exemple, les moyens d'assemblage peuvent avantageusement comprendre un élément d'assemblage comprenant au moins une portion de rétention et s'étendant tangentiellement, hélicoïdalement ou longitudinalement lorsqu'installé sur la paroi.

Une portion de rétention peut être en vis-à-vis d'une autre portion de rétention, chaque portion de rétention correspondant à un bord d'extrémité d'un élément de grille.

En particulier, un élément d'assemblage peut comprendre deux portions de rétention en vis-à-vis, chaque portion de rétention correspondant à un bord d'extrémité d'un élément de grille.

Ainsi, et en particulier lorsque l'ensemble de grille comporte plusieurs éléments de grille, les moyens d'assemblage peuvent former une ossature support recevant les différents éléments de grille.

Alternativement, l'élément de bride peut être relativement ponctuel, et en particulier être monté afin d'exercer un appui sur une extrémité de plat seulement. Dans ce cas, on pourra prévoir des plaques d'étanchéité s'étendant longitudinalement entre deux éléments de bride et/ou une ou des plaque(s) de recouvrement.

Avantageusement, l'élément de bride peut définir deux portions de rétention, de part et d'autre de l'orifice, pour maintenir en place deux bords d'extrémité d'élément de grille respectifs.

Avantageusement, l'élément de bride peut définir une partie de rétention suffisamment étendue pour recouvrir plusieurs extrémités de plats d'un bord d'extrémité d'élément de grille.

Avantageusement, l'élément de bride peut définir deux parties de rétention suffisamment étendues pour recouvrir chacune plusieurs extrémités de plats d'un bord d'extrémité d'élément de grille. L'élément de bride peut définir un ou plusieurs orifices entre ces deux parties de rétention, par exemple autant d'orifices qu'il y a de paires d'extrémités de plats en regard l'un de l'autre. L'élément de bride assure ainsi, outre une fonction de fixation, une fonction d'étanchéité dans la mesure où les deux bords d'extrémité en regard l'un de l'autre sont recouverts. Dit autrement, les moyens d'étanchéité peuvent alors comprendre l'élément de bride.

La paroi cylindrique peut par exemple être une paroi de lit catalytique à flux radial.

L'invention peut trouver une application par exemple dans les reformeurs catalytiques, dans les régénérateurs de reformage, dans le cadre d'autres procédés de transformation par déshydrogénation, et plus généralement dans le cadre de tout procédé de filtrage de particules solides dans un fluide au moyen d'une paroi cylindrique.

La paroi de lit catalytique peut être une paroi de cylindre intérieur, de diamètre relativement restreint par rapport au diamètre d'une section de réacteur, ou bien encore un panier extérieur de diamètre plus élevé.

Selon les conditions opératoires de l'unité à laquelle est destinée cette paroi cylindrique, les particules solides peuvent circuler ou non.

Les particules solides, par exemple le catalyseur, peuvent par exemple se présenter sous forme de grains avec une granulométrie centrée autour d'un ou quelques millimètre(s). Par exemple, la taille moyenne des grains de catalyseur (de forme sphérique ou extrudés) peut varier entre 0,5 et 5,0 mm, avantageusement entre 1 et 3 mm. Le catalyseur étant sujet à l'érosion et à l'attrition, une partie des grains de catalyseur peut avoir un diamètre compris entre 0,7 et 1,0 mm.

Le catalyseur est destiné à être contenu dans un espace annulaire entre deux parois de lit catalytique à flux radial dont l'une au moins est telle que décrite ci-dessus.

Un fluide est destiné à circuler radialement, par exemple depuis l'extérieur de la paroi la plus externe, ou panier extérieur, vers l'autre paroi dite de cylindre intérieur. Le fluide traverse le lit catalytique et est collecté dans le cylindre intérieur. Alternativement, le fluide peut s'écouler du cylindre intérieur vers le panier extérieur. L'ensemble de grille et le cylindre perforé permettent le passage du fluide tout en empêchant le catalyseur de passer à l'intérieur du cylindre intérieur ou, le cas échéant, à l'extérieur du panier extérieur.

La paroi cylindrique de filtrage de particules solides peut donc être conçue pour filtrer des particules initialement à l'extérieur du cylindre (avec les fils à l'extérieur), le fluide entrant à l'intérieur du cylindre, ou bien encore pour filtrer des particules à intérieur du cylindre (avec les fils à l'intérieur), le fluide passant de l'intérieur du cylindre vers l'extérieur du cylindre.

Dans un mode de réalisation, on peut prévoir un cylindre perforé additionnel, dit cylindre de contention, comprenant une feuille perforée, dite de contention. Ce cylindre de contention est disposé concentrique entre l'ensemble de grille et le cylindre perforé. En effet, l'assemblage des éléments de grille en un ensemble de grille étant indépendant du cylindre perforé, ou démontable, il est possible d'intercaler entre ce cylindre perforé et l'ensemble de grille ce cylindre additionnel (de contention), permettant ainsi de fiabiliser la rétention de catalyseur dans l'espace annulaire dans le cas d'une défaillance mécanique du cylindre de grille.

La feuille perforée utilisée pour le cylindre de contention peut définir des évidements de diamètres inférieurs à ceux d'orifices définis dans le cylindre perforé et inférieur à la taille moyenne des grains de catalyseur.

Le cylindre de contention peut avantageusement être indépendant du cylindre de grille.

Par exemple, le cylindre de contention peut être maintenu en place par les moyens d'assemblage, par exemple par l'élément de bride.

Avantageusement, les orifices du cylindre de contention peuvent avoir des dimensions dans le plan tangentiel de l'ordre de la distance entre deux fils adjacents, permettant ainsi de renforcer la filtration.

Il existe un risque d'obturation de ces orifices. Mais du fait du caractère démontable de leur fixation, les éléments de grilles peuvent être retirés, permettant ainsi de nettoyer le cylindre de contention.

Il est en outre proposé un réacteur comprenant une paroi de lit catalytique à flux radial tel que décrit ci-dessus.

Il est en outre proposé une unité de reformage catalytique comprenant un réacteur tel que décrit ci-dessus.

L'invention sera mieux comprise en référence aux figures ; lesquelles illustrent des modes de réalisation donnés à titre d'exemple et non limitatifs.
- La figure 1, déjà commentée, montre un exemple de reformeur catalytique selon l'art antérieur.
- La figure 2 est une vue de coupe d'une section d'une portion de paroi de cylindre intérieur (« center pipe » en anglais) de lit catalytique à flux radial selon un mode de réalisation connu de l'art antérieur,
- La figure 3 est une vue de coupe d'une section d'une portion de paroi selon un mode de réalisation de l'invention,
- La figure 4 est une vue en perspective, et très schématique, d'une paroi de cylindre intérieur selon le mode de réalisation de la figure 3,
- La figure 5A est une vue en perspective d'une portion de paroi selon un autre mode de réalisation de l'invention,
- La figure 5B est une vue de coupe d'une section d'une portion de paroi selon encore un autre un mode de réalisation de l'invention,
- La figure 6 une vue de coupe d'une section d'une portion de paroi selon encore un mode de réalisation de l'invention.

Les proportions ne sont pas forcément respectées d'une figure à l'autre.

En revanche, on pourra utiliser des références identiques d'une figure à l'autre pour désigner des éléments identiques ou similaires.

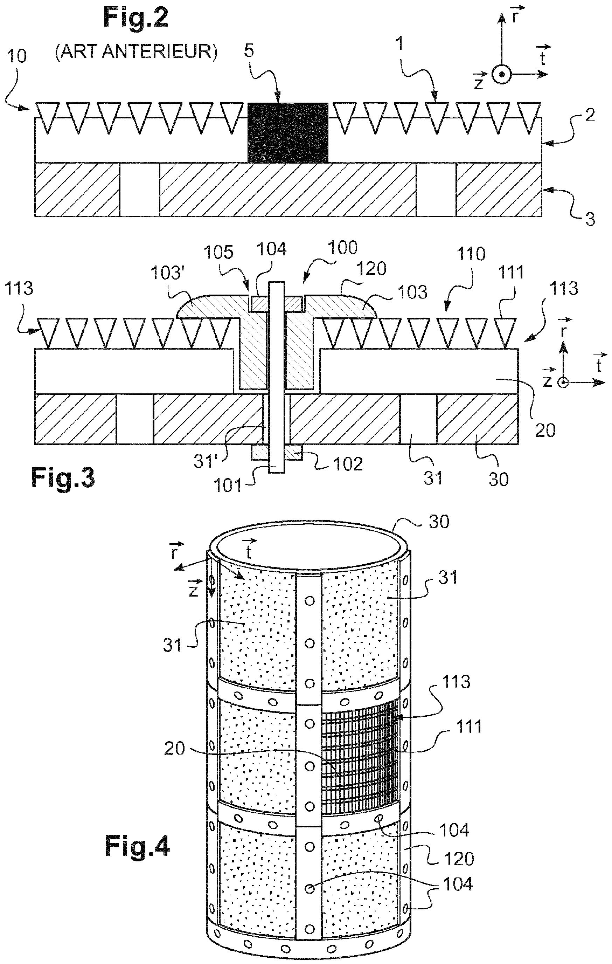

En référence à la figure 2, un réacteur de reformage peut comprendre un panier extérieur et un cylindre intérieur dont une portion est ici représentée.

Ce cylindre intérieur comprend un cylindre perforé 3 réalisé à partir d'une feuille perforée solidarisée par ses deux bords opposés (non visibles sur la portion représentée).

Le cylindre perforé 3 s'étend suivant une direction longitudinale correspondant au vecteur *̅z̅*̅.

Le cylindre intérieur comprend en outre un ensemble de grille 10 disposé concentriquement par rapport au cylindre perforé 3, cet ensemble de grille est formé par assemblage d'éléments de grille comprenant des plats 2 et des fils 1.

Les fils 1 s'étendent suivant la direction longitudinale *̅z̅*̅ , tandis que les plats 2 s'étendent tangentiellement de façon à former des cercles espacés les uns des autres le long de la direction longitudinale *̅z̅*̅.

Un cordon de soudure 5 permet de solidariser les plats 2 à la plaque perforée 3 et de solidariser els plats 2 entre eux. Ce même cordon de soudure 5 s'étend sur toute la hauteur du cylindre.

En référence à la figure 3, une paroi de lit catalytique 100 d'un cylindre intérieur comprend un ensemble de grille 110 et un cylindre perforé 30 disposés concentriques et s'étendant suivant une direction longitudinale *̅z̅*̅.

L'ensemble de grille 110 est destiné être en contact avec un catalyseur non représenté.

Du fluide non représenté est destiné à traverser cette paroi 100 par un écoulement sensiblement radial.

Le cylindre perforé définit des orifices 31 pour laisser passer le fluide. Ces orifices 31 peuvent avoir des dimensions de l'ordre de quelques millimètres (par exemple entre 3 mm et 30 mm).

Les grains de catalyseur peuvent par exemple avoir des dimensions de l'ordre du millimètre, par exemple un diamètre moyen de particule entre 1.0 et 3.0 millimètres.

L'ensemble de grille 110 permet d'assurer la rétention du catalyseur dans l'espace annulaire. Cette grille est réalisée à partir de plusieurs éléments de grille 113, chaque élément de grille 113 comprenant des plats 20 s'étendant tangentiellement et espacés les uns des autres suivant la direction longitudinale *̅z̅*̅.

Chaque élément de grille 113 comprend en outre des fils 111, ici de section triangulaire, solidarisés aux plats 20.

L'espace entre deux fils adjacents étant relativement restreint (inférieur au diamètre moyen des particules du catalyseur) l'ensemble de grille 110 participe à la rétention du catalyseur et ce malgré le passage du fluide à travers la paroi 100.

Des moyens d'assemblage assurent une fixation démontable des éléments de grille 113 sur le cylindre perforé 30.

Comme on le voit sur la figure 4, on prévoit plusieurs éléments de grille 113 pour une même hauteur de cylindre donnée, chaque élément de grille correspondant à une plage angulaire donnée, par exemple entre 60° et 90°. En outre, chaque élément de grille occupe une portion seulement de la hauteur du cylindre. Les éléments de grille 113 peuvent ainsi être de dimensions relativement faibles, et en particulier passer par un trou d'homme.

Les moyens d'assemblage comportent des éléments d'assemblage, chaque élément d'assemblage comprenant un élément de bride 120, des tiges filetées 101 et des écrous 102, 104. Les éléments d'assemblage ont une forme allongée, de façon à recouvrir tout un bord d'extrémité d'élément de grille, ici deux bords par élément d'assemblage. Les éléments d'assemblage forment ainsi une ossature support des éléments de grille.

Chaque élément de bride définit des orifices pour le passage de tiges filetées 101, et des portions de rétention 103, 103' recouvrant des bords d'extrémité d'éléments de grille 113 correspondant.

Dans cet exemple, les portions de rétention s'étendent tangentiellement ou longitudinalement, de façon à recouvrir au moins une partie, et avantageusement la totalité, des bords d'extrémité correspondant.

L'élément de bride 120 comprend deux portions de rétention 103, 103', pour deux bords d'extrémité de deux éléments de grille adjacents respectifs.

Ces portions de rétention recouvrant les bords d'extrémité ainsi que l'espace entre ces bords d'extrémité, l'élément de bride 120 intègre des moyens d'étanchéité obturant sur les bords d'extrémité correspondant des passages d'écoulement entre les éléments de grille correspondant et le cylindre perforé.

Les tiges filetées 101 passent au travers des orifices 31' de la plaque perforée 30.

Des écrous 102, 104 permettent de fixer rigidement, et de façon démontable, l'élément de bride sur la plaque perforée 30.

Dans cet exemple, l'élément de bride 120 définit des évidements 105 sur sa partie supérieure, afin de recevoir d'un 104 de ces écrous. Les écrous 104 peuvent ainsi, lorsque vissés, affleurer à la surface des éléments de bride 120.

Lorsque les écrous 102, 104 sont suffisamment serrés, les portions de rétention 103, 103' exercent un appui sur les bords d'extrémité des éléments de grille correspondant, plaquant ainsi ces bords d'extrémité de la grille 113 contre le cylindre perforé.

Comme il ressort de la figure 3, l'élément de bride définit avec la plaque perforée 30 (ou, le cas échéant, le cylindre de contention), deux cavités pour recevoir les deux bords d'extrémités des deux éléments de grille correspondants. Les éléments de grille 113 peuvent ainsi être assemblés en un cylindre de grille sans modification des éléments de grille eux-mêmes.

Comme il ressort de la figure 4, les moyens d'assemblage de ces éléments de grille 113 forment ainsi en quelques sortes une ossature support, permettant un assemblage rigide mais démontable des différents éléments de grille 113.

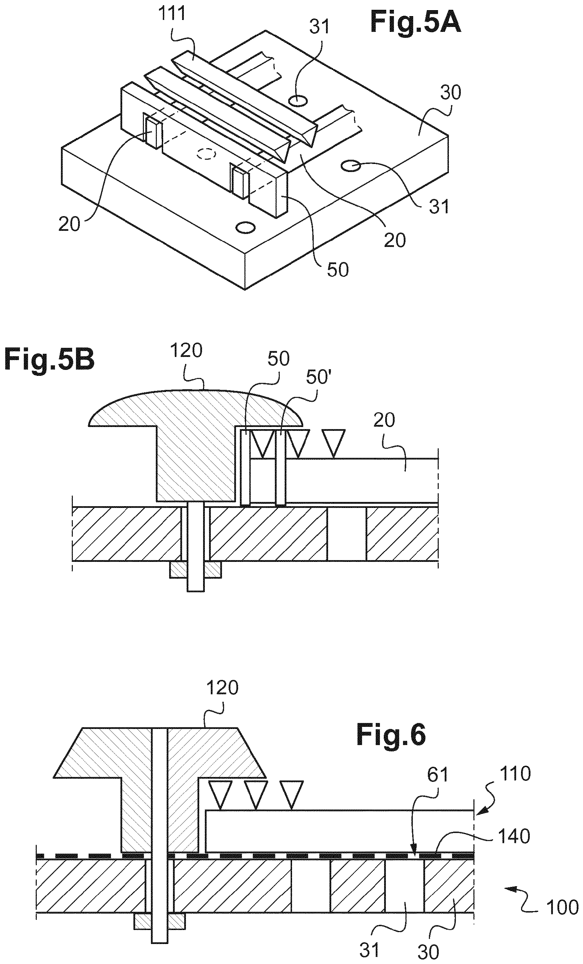

Dans les modes de réalisation des figures 5A et 5B, on prévoit en outre des éléments dédiés à l'étanchéité, ici des plaques 50 et dans la variante de la figure 5B, 50 et 50', s'étendant longitudinalement sur toute la longueur du cylindre de grille.

En référence à la figure 5A, ces plaques 50 sont disposées à proximité des extrémités des plats 20, sur le bord de l'élément de grille.

Ces plaques 50 définissent des évidements pour recevoir des extrémités des plats 20.

En référence à la figure 5B, on prévoit, outre les plaques 50 aux bords des éléments de grille, des plaques additionnelles 50'.

La plaque additionnelle 50' est parallèle ou sensiblement parallèle à la plaque 50, et est distante de cette plaque 50 d'une longueur légèrement supérieure à la largeur d'un fil 111.

Les moyens d'étanchéité ont ainsi une structure avec une épaisseur double, assurant ainsi une étanchéité renforcée.

Dans le mode de réalisation de la figure 6, la paroi 100 comporte en outre une feuille perforée additionnelle 140 formant un cylindre perforé additionnel.

Ce cylindre perforé additionnel est interposé entre le cylindre perforé 30 et l'ensemble de grille 110. La feuille perforée additionnelle définit des orifices 61 de bien plus faibles sections que les orifices 31 du cylindre perforé 30, permettant ainsi la rétention du catalyseur dans le cas d'une défaillance mécanique du cylindre de grille.

Cette feuille perforée additionnelle 140 est maintenue en place par l'élément de bride 120, assurant ainsi une fixation indépendante du cylindre perforé et de la grille 110, permettant ainsi de limiter la sensibilité aux changements de température.

## Revendications

1. Paroi (100) cylindrique de filtrage de particules solides dans un fluide, au travers de laquelle ce fluide est susceptible de circuler, cette paroi comprenant :
un cylindre perforé (30) s'étendant suivant une direction longitudinale, ledit cylindre étant réalisé à partir d'au moins une plaque perforée,
un ensemble de grille (110), à forme générale de cylindre, destiné à être en contact avec les particules solides, l'ensemble de grille et le cylindre perforé étant concentriques, l'ensemble de grille comportant au moins un élément de grille (113), ledit élément de grille comprenant une pluralité de fils (111) s'étendant chacun suivant la direction longitudinale, et
des moyens d'assemblage (101, 102, 104, 120) dudit au moins un élément de grille de façon à former l'ensemble de grille à forme générale de cylindre, lesdits moyens d'assemblage étant agencés pour assurer une fixation dudit au moins un élément de grille démontable sur la plaque perforée.

2. Paroi (100) selon la revendication 1, dans lequel les moyens d'assemblage (101, 102, 104, 120) sont agencés pour pouvoir être eux-mêmes installés de façon démontable sur le cylindre perforé.

3. Paroi selon la revendication 2, dans laquelle les moyens d'assemblage comprennent une tige (101) destinée à être introduite dans ou au travers d'une plaque perforée (30) du cylindre perforé.

4. Paroi (100) selon l'une quelconque des revendications 1 à 3, dans laquelle les moyens d'assemblage (101, 102, 104, 120) étant agencés pour assurer une fixation démontable d'au moins un élément de grille sur le cylindre perforé, les moyens d'assemblage définissant au moins une cavité pour recevoir au moins une portion d'au moins un bord d'extrémité d'élément de grille.

5. Paroi (100) selon la revendication 4, dans lequel les moyens d'assemblage comprennent au moins une portion de rétention (103, 103') destinée à recouvrir le bord d'extrémité de l'élément de grille (113) reçu dans la cavité correspondante, **caractérisée en ce que** les moyens d'assemblage sont agencés pour que ladite portion de rétention exerce un appui contre ledit bord d'extrémité afin de plaquer ledit bord d'extrémité contre le cylindre perforé.

6. Paroi (100) selon la revendication 5 lorsqu'elle dépend de la 3, dans laquelle les moyens d'assemblage comprennent un élément de bride (120) comprenant la portion de rétention (103, 103') et définissant un orifice pour le passage de la tige (101).

7. Paroi (100) selon l'une quelconque des revendications 1 à 6, dans laquelle l'ensemble de grille (110) comprend une pluralité d'éléments de grille (113), **caractérisé en ce que** chaque élément de grille s'étend tangentiellement de façon à occuper une plage angulaire strictement inférieure à 360°, avantageusement inférieure à 180°.

8. Paroi (100) selon l'une quelconque des revendications 1 à 7, comprenant en outre un cylindre perforé additionnel comprenant une feuille perforée (140), ledit cylindre perforé additionnel étant disposé concentrique entre l'ensemble de grille (110) et le cylindre perforé (30).

9. Paroi (100) selon l'une quelconque des revendications 1 à 8, comprenant en outre des moyens d'étanchéité (50, 50') agencés pour obturer sur un bord d'extrémité d'au moins un élément de grille un passage d'écoulement entre cet élément de grille (110) et la plaque perforée (30).

10. Paroi (100) selon l'une quelconque des revendications 1 à 9, ladite paroi étant une paroi de lit catalytique à flux radial.

11. Réacteur comprenant une paroi de lit catalytique à flux radial selon la revendication 10.

12. Unité de reformage catalytique comprenant un réacteur selon la revendication 11.

13. Unité de reformage catalytique selon la revendication 12, dans lequel la paroi de lit catalytique à flux radial selon la revendication 11 est une paroi de cylindre intérieur.

## Patentansprüche

1. Zylindrische Wand (100) zum Filtern von Feststoffpartikeln in einem Fluid, durch die dieses Fluid zu zirkulieren imstande ist, wobei diese Wand umfasst:
einen perforierten Zylinder (30), der sich in einer Längsrichtung erstreckt, wobei der Zylinder aus mindestens einer perforierten Platte hergestellt ist,
eine Gitteranordnung (110) mit allgemeiner Zylinderform, die dazu bestimmt ist, mit den Feststoffpartikeln in Kontakt zu sein, wobei die Gitteranordnung und der perforierte Zylinder konzentrisch sind, wobei die Gitteranordnung mindestens ein Gitterelement (113) umfasst, wobei das Gitterelement eine Vielzahl von Drähten (111) umfasst, die sich jeweils in der Längsrichtung erstrecken, und
Zusammenfügemittel (101, 102, 104, 120) des mindestens einen Gitterelements, um die Gitteranordnung mit der allgemeinen Zylinderform zu bilden, wobei die Zusammenfügemittel dazu angeordnet sind, eine Befestigung des mindestens einen demontierbaren Gitterelements auf der perforierten Platte sicherzustellen.

2. Wand (100) nach Anspruch 1, wobei die Zusammenfügemittel (101, 102, 104, 120) dazu angeordnet sind, selbst aufdemontierbare Weise auf dem perforierten Zylinder installiert werden zu können.

3. Wand nach Anspruch 2, wobei die Zusammenfügemittel einen Schaft (101) umfassen, der dazu bestimmt ist, in oder durch eine perforierte Platte (30) des perforierten Zylinders eingeführt zu werden.

4. Wand (100) nach einem der Ansprüche 1 bis 3, wobei die Zusammenfügemittel (101, 102, 104, 120) dazu angeordnet sind, eine demontierbare Befestigung mindestens eines Gitterelements auf dem perforierten Zylinder sicherzustellen, wobei die Zusammenfügemittel mindestens einen Hohlraum zum Aufnehmen mindestens eines Abschnitts mindestens einer Endkante des Gitterelements definieren.

5. Wand (100) nach Anspruch 4, wobei die Zusammenfügemittel mindestens einen Halteabschnitt (103, 103') umfassen, der dazu bestimmt ist, die Endkante des Gitterelements (113), das in dem entsprechenden Hohlraum aufgenommen ist, abzudecken, **dadurch gekennzeichnet, dass** die Zusammenfügemittel derart angeordnet sind, dass der Halteabschnitt einen Anlagedruck auf die Endkante ausübt, um die Endkante gegen den perforierten Zylinder abzustützen.

6. Wand (100) nach Anspruch 5, wenn er von 3 abhängt, wobei die Zusammenfügemittel ein Flanschelement (120) umfassen, das den Halteabschnitt (103, 103') umfasst und eine Öffnung für das Durchgehen des Schaftes (101) definiert.

7. Wand (100) nach einem der Ansprüche 1 bis 6, wobei die Gitteranordnung (110) eine Vielzahl von Gitterelementen (113) umfasst, **dadurch gekennzeichnet, dass** sich jedes Gitterelement tangential erstreckt, um einen Winkelbereich einzunehmen, der strikt kleiner als 360°, vorteilhafterweise kleiner als 180° ist.

8. Wand (100) nach einem der Ansprüche 1 bis 7, die ferner einen zusätzlichen perforierten Zylinder umfasst, der eine perforierte Platte (140) umfasst, wobei der zusätzliche perforierte Zylinder konzentrisch zwischen der Gitteranordnung (110) und dem perforierten Zylinder (30) angeordnet ist.

9. Wand (100) nach einem der Ansprüche 1 bis 8, die ferner Dichtungsmittel (50, 50') umfasst, die dazu angeordnet sind, an einer Endkante mindestens eines Gitterelements einen Strömungsdurchgang zwischen diesem Gitterelement (110) und der perforierten Platte (30) zu schließen.

10. Wand (100) nach einem der Ansprüche 1 bis 9, wobei die Wand eine Radialfluss-Katalysatorbettwand ist.

11. Reaktor, der eine Radialfluss-Katalysatorbettwand nach Anspruch 10 umfasst.

12. Katalytische Reformiereinheit, die einen Reaktor nach Anspruch 11 umfasst.

13. Katalytische Reformiereinheit nach Anspruch 12, wobei die Radialfluss-Katalysatorbettwand nach Anspruch 11 eine Innenzylinderwand ist.

## Claims

1. A cylindrical wall (100) for filtering solid particles in a fluid, through which said fluid is capable of circulating, said wall comprising:
a perforated cylinder (30) extending in a longitudinal direction, said cylinder being made from at least one perforated plate,
a screen assembly (110), generally cylindrical in shape, intended to be in contact with the solid particles, the screen assembly and the perforated cylinder being concentric, the screen assembly comprising at least one screen element (113), said screen element comprising a plurality of wires (111) each extending in the longitudinal direction, and
assembly means (101, 102, 104, 120) for assembling said at least one screen element in order to form the generally cylindrical screen assembly, said assembly means being arranged to ensure the attachment of said at least one removable screen element to the perforated plate.

2. The wall (100) according to claim 1, wherein the assembly means (101, 102, 104, 120) are arranged so that they can themselves be installed removably on the perforated cylinder.

3. The wall according to claim 2, wherein the assembly means comprise a rod (101) intended to be inserted into or through a perforated plate (30) of the perforated cylinder.

4. The wall (100) according to any one of claims 1 to 3, wherein the assembly means (101, 102, 104, 120) are arranged to ensure removable attachment of at least one screen element on the perforated cylinder, the assembly means defining at least one cavity for receiving at least one portion of at least one end edge of the screen element.

5. The wall (100) according to claim 4, wherein the assembly means comprise at least one retaining portion (103, 103') intended to cover the end edge of the screen element (113) received in the corresponding cavity, **characterised in that** the assembly means are arranged so that said retaining portion exerts a bearing force against said end edge in order to press said end edge against the perforated cylinder.

6. The wall (100) according to claim 5 when it is dependent on 3, wherein the assembly means comprise a flange element (120) comprising the retaining portion (103, 103') and defining an opening for the passage of the rod (101).

7. The wall (100) according to any one of claims 1 to 6, wherein the screen assembly (110) comprises a plurality of screen elements (113), **characterised in that** each screen element extends tangentially so as to occupy an angular range of strictly less than 360°, advantageously less than 180°.

8. The wall (100) according to any one of claims 1 to 7, further comprising an additional perforated cylinder comprising a perforated sheet (140), said additional perforated cylinder being arranged concentrically between the screen assembly (110) and the perforated cylinder (30).

9. The wall (100) according to any one of claims 1 to 8, further comprising sealing means (50, 50') arranged to close off, on one end edge of at least one screen element, a flow passage between this screen element (110) and the perforated plate (30).

10. The wall (100) according to any one of claims 1 to 9, said wall being a radial flow catalytic bed wall.

11. A reactor comprising a radial flow catalytic bed wall according to claim 10.

12. A catalytic reforming unit comprising a reactor according to claim 11.

13. The catalytic reforming unit according to claim 12, wherein the radial flow catalytic bed wall according to claim 11 is an inner cylinder wall.
